# EUROPEAN PATENT APPLICATION

(11) **EP 1 113 378 A2**
(43) Date of publication of application: **04.07.2001**
(21) Application number: 00204477.4
(22) Date of filing: 12.12.2000
(51) Int. Cl.: G06F 17/60

(54) **Newspaper circulation system**

(30) Priority: 31.12.1999 US 476015
(71) Applicant: CNT Corp., Phoenix, AZ 85004 (US)
(72) Inventor: Cunningham, Richard L., Phoenix, AZ 85012 (US)
(74) Representative: Cookson, Barbara Elizabeth

(57) **Abstract**

A distributed computer network is provided for delivering a newspapers or other articles to a home, business, or other structure at which a customer resides. The system enables a newspaper to be delivered one or more days a week, and enables a different newspaper to be delivered. The system uses a central server (20) linked to geographically distributed control computers (22) which can transmit it individual delivery computers (23) used by newspaper delivery boys or other contractors.

## Description

This invention relates to a subscription and delivery system for a newspaper or other article delivered to a home, business, or other structure at which a customer resides.

More particularly, the invention relates to a subscription and delivery system which delivers different products to customers, which provides a carrier with a delivery list which sets forth the customers in a set delivery sequence, and which provides the travel directions for reaching the residence of each customer.

In a further respect, the invention relates to a subscription and delivery system which can schedule the delivery of a newspaper or other article to a customer on any single day of the week and on any two or more days of the week.

In another respect, the invention relates to a subscription and delivery system which includes each address in a city and the directions for reaching each address, and which can deliver a newspaper on a single day's notice.

Circulation systems have long existed for taking subscriptions, monitoring subscription accounts, and delivering newspapers in large and small towns throughout the United States and other countries. One problem encountered by such pre-existing circulation systems is that each system ordinarily is designed to deliver a single newspaper and does not enable the delivery of two different newspapers. These pre-existing circulation systems are organized only to deliver their own newspaper, and not competing newspapers.

Another problem encountered by prior art circulation systems is that the systems do not facilitate the delivery of a newspaper to a new customer the day after the customer subscribes. A new subscription makes its way from the subscription department of a newspaper to the delivery department and finally to the newspaper carrier responsible for delivering the paper.

A further problem encountered by existing newspaper circulation systems is that such systems do not organize the customers in a carrier's "route" into a desirable sequence and do not provide travel directions to each customer address. Instead, the newspaper boy or other carrier utilizes his personal knowledge to develop a route and path of travel to deliver newspapers to his customers.

Still another problem occurs when a new subscriber resides at an address which is not included in the list of addresses which make up a newspapers subscription list. Similar street names cause confusion as to the location of a customer's home, business, or other residence to which a newspaper is to be delivered.

Yet a further problem occurs in existing newspaper circulation systems because they are sometimes incorporated in large mainframe computers which simply are not, practically speaking, organized or equipped to deal with the foregoing problems.

Yet still another problem in existing newspaper circulation systems is that the systems are organized to deliver newspapers five to seven days a week and cannot readily accommodate a customer who wishes to have a paper only one day or a few days a week.

Accordingly, it would be highly desirable to provide an improved circulation system which would facilitate the delivery to a customer's residence of different newspapers or other products, which would organize the customers in a carrier's route into an efficient delivery sequence, which would provide travel directions for following a delivery sequence in a carrier's route, which would enable large numbers of personal computers or other small-sized computers to be readily incorporated into the circulation system to make the system more flexible and responsive, which would schedule the delivery of a newspaper to a customer on any single day of the week or on any two or more days of the week, and which could schedule delivery of a paper to a customer one or more days a week.

Therefore, it is a principal object of the invention to provide an improved circulation system for taking subscriptions and delivering newspapers and other products to a home, business, or other residence of a customer.

A further object of the invention is to provide an improved newspaper circulation system which can deliver different products to a customer, can prepare a list of customers in a suggested sequential delivery list, and can provide directions for travelling to the residence of each customer in the suggested delivery sequence.

Another object of the invention is to provide an improved newspaper circulation system which can deliver a newspaper or other product to a customer one or more times a week.

Still a further object of the invention is to provide an improved newspaper circulation system which can deliver a newspaper to a customer the day after the customer takes out a new subscription to the newspaper.

These and other further and more specific objects and advantages of the invention will be apparent to those skilled in the art from the following detailed description thereof, taken in conjunction with the drawings, in which:
- Fig. 1: is a block diagram illustrating a server utilized in a newspaper circulation system constructed in accordance with the principles of the invention;
- Fig. 2: is a block flow diagram further illustrating a newspaper circulation system constructed in accordance with the invention;
- Fig. 3: is a block diagram illustrating the mode of operation of a control computer constricted in accordance with the principles of the invention and located at a geographical site remote from the server computer illustrated in Fig. 1; and.
- Fig. 4: is a block diagram which illustrates a typical program or logic function utilized in the control computer of Fig. 3 in accordance with the presently preferred embodiment of the invention.

Briefly, in accordance with my invention, I provide an improved newspaper circulation system. The system includes at least one server including subscription and delivery data; and, at least one control computer in a geographical area remote from the server to access the subscription and delivery data in the server. The control computer includes a system to utilize at least a portion of the subscription and delivery data to determine which subscriptions are in force in said geographical area, and, includes a system to utilize at least a portion of the circulation and delivery data to produce a delivery list for at least one selected calendar date.

In another embodiment of the invention, I provide an improved newspaper circulation system. The newspaper circulation system includes at least one server including subscription and delivery data; at least one delivery computer remote from the server; at least one control computer in a geographical area remote from the server to access the subscription and delivery data in the server and including a system to utilize at least a portion of the subscription and delivery data to produce a delivery list for at least one selected calendar date, the delivery list comprising a list of subscribers receiving a newspaper; and, a system for transmitting from the control computer to the delivery computer the delivery list for display on the delivery computer.

In a further embodiment of the invention, we provide an improved newspaper circulation system. The circulation system includes at least one server including subscription and delivery data for at least two different newspapers; at least one delivery computer remote from the server; and, at least one control computer in a geographical area remote from the server to access the subscription and delivery data in the server and including a selection system to utilize at least a portion of the subscription and delivery data to produce a delivery list for at least one selected calendar date. The delivery list comprises a list of subscribers some of which receive one of the two different newspapers and some of which receive the other of the two different newspapers. The newspaper circulation system also includes a transmitting system for transmitting from the control computer to the delivery computer the delivery list for display on the delivery computer to enable delivery of the different newspapers on the calendar date.

In still another embodiment of the invention, I provide an improved method for delivering newspapers. The method includes the steps of providing a server computer including memory; and, storing in the memory subscription, and delivery data including customers who receive a newspaper one day a week and customers who receive a newspaper more than one day a week, and the address of each residence in a selected geographical area. The method further includes the steps of providing a control computer remote from the server to access the subscription and delivery data in the server and utilize at least a portion of the subscription and delivery data to produce a delivery list for at least one selected calendar date to deliver a first newspaper to a customer who receives a newspaper only one time a week, and a second newspaper to a customer who receives a newspaper more than once a week.

In yet another embodiment of the invention, I provide an improved method for delivering newspapers including providing at least one server including subscription and delivery data for a newspaper; providing at least one delivery computer remote from the server; providing at least one control computer in a geographical area remote from the server to access the subscription and delivery data in the server and including a selection system to utilize at least a portion of the subscription and delivery data to produce a delivery list for at least one selected calendar date. The delivery list comprises a list of subscribers in a selected sequence for delivering a newspaper to the subscribers, and travel directions for reaching the address of each of the subscribers. The method also includes the steps of providing a transmitting system for transmitting from the control computer to the delivery computer the delivery list for display on the delivery computer to enable delivery of the newspapers on the calendar date in the selected sequence, of accessing with the control computer the subscription and delivery data in the server and using the selection system to utilize a portion of the subscription and delivery data to produce a delivery list for at least one selected calendar date; of using the transmitting system to transmit from the control computer to the delivery computer the delivery list for display on the delivery computer; and, of using the delivery list displayed on the delivery computer to deliver newspapers to the subscribers in the delivery list.

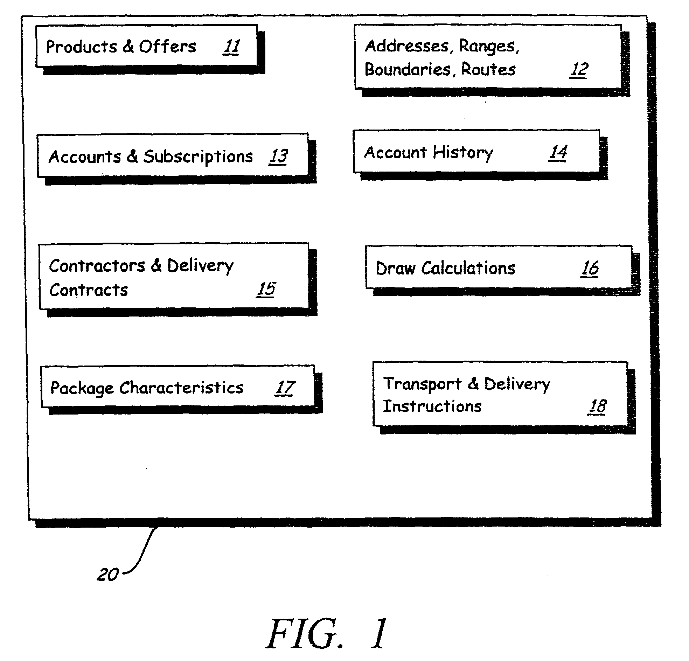

Turning now to the drawings, which depict the presently preferred embodiments of the invention for the purpose of illustrating the invention and not by way of limitation of the scope of the invention, and in which like reference characters refer to corresponding elements throughout the several views, Fig. 1 illustrates a server 20 utilized in accordance with the principles of the invention. The server 20 is a central computer. The server 20 provides processing services and/or provides data to an interconnected group of control computers. Each control computer typically, but not necessarily, comprises a personal computer (PC) 22 located at a site remote from the server 20. The remote site typically comprises a newspaper company utilizing the circulation system of the invention to deliver newspapers or other products to residences in a geographic area or areas. Server 20 is the core of a client-server network. Each client computer consists of a site personal computer 22 and is connected to and communicates with server 20 via modems or any other desired transmission system.

Server 20 typically performs three principal functions. First, server 20 stores databases or files and enables each site personal computer (control computer) 22 to access the databases. Server 20 includes the products & offers database 11, the addresses, ranges, boundaries, routes database 12; the accounts & subscriptions database 13; the account history database 14; the contractors and delivery contracts database 15; the draw calculations database 16; the package characteristics database 17; and the transport & delivery instructions database 18.

The products & offers database 11 includes a list of products offered for sale and of the cost and terms of purchasing or subscribing to each product. By way of example, and not limitation, the cost of purchasing each product can include the cost of a one time purchase, the cost of purchasing a product weekly, daily, semi-weekly, etc. The products can comprise different newspapers like the New York Times and the Arizona Republic.

The addresses, ranges, boundaries, routes database 12 can, by way of example and not limitation, include the names and addresses of subscribers, include selected newspaper delivery routes and the subscribers and/or potential subscribers on each route, include the total number of subscribers and/or potential subscribers on each route, and include a geographical area or areas encompassed by each delivery route or client computer.

The accounts & subscriptions database 13 can, by way of example and not limitation, include a list of subscribers, include the length of the subscription and product or products covered by the subscription or subscriptions, include the amount owed by each subscriber at the end of a selected billing period for a subscription, include the status of the account for each subscription, including whether the subscriber timely pays the account, whether the customer's account is past due, and, if the account is past due, include how many days the account is past due and the total amount which is past due and owed.

The account history database 14, by way of example and not limitation, includes the account history of each subscriber, including whether payments due from the subscriber are current or past due.

The contractors and delivery contracts database 15, by way of example and not limitation, includes a list of individuals or companies contracted to deliver newspapers and includes contracts with such delivery entities.

The draw calculations database 16 includes, by way of example and not limitation, calculations on the number of each product which must be delivered in a selected geographical area or areas on a particular day, week, or other period of time.

The package characteristics database 17, by way of example and not limitation, includes a description and characteristics of each product, includes the packaging for each product (i.e., is a newspaper delivered in a plastic bag, is the newspaper folded, etc.), includes the areas where the product is delivered, includes how the product is delivered, includes financial terms available to purchase the product, etc.

The transport & delivery database 18, by way of example and not limitation, includes how a product is transported to a distribution site ('i.e., by truck, by car, by rail, by mail, by being picked up directly by a carrier, etc.), includes how a product is delivered (i.e., by a carrier from a distribution site, by mail, by rail, by customer pick-up, by a carrier in an automobile, by a carrier on foot, etc.), includes the time of day a product is delivered, includes the type of residence to which the delivery is made (i.e., a single residence home, a business, an apartment building, an airline at an airport, etc.), includes travel directions to each address in a selected geographical area or areas, and includes the number of delivery people required for a particular delivery.

A second principal function of server 20 is to coordinate communication between the site personal computers 22.

A third principal function of server 20 is to control shared resources such as printers.

If desired, server 20 can carry out computing tasks. For example, server 20 is presently responsible for managing and accessing databases 11 to 18. Presently, however, the site personal computers (site PCs) 22 carry out most, if not all, of the other computing and data organization functions after retrieving data from one or more databases in server 20.

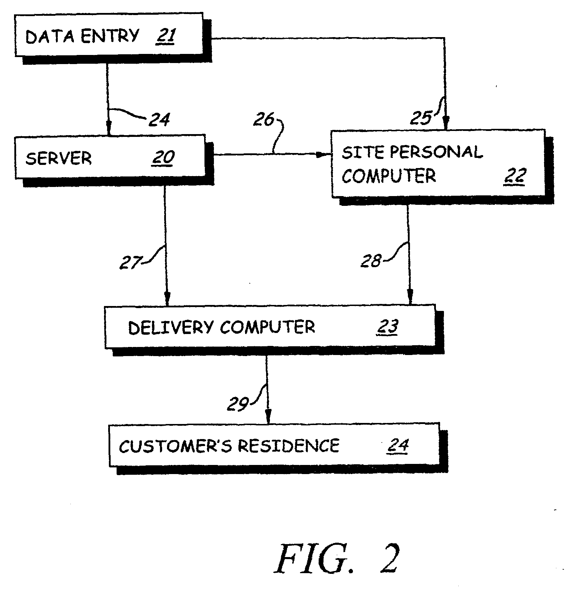

In Fig. 2, a keyboard or other data entry 21 apparatus is utilized to input 24 into server 20 data for each of databases 11 to 18. Data entry 21 can also be utilized to input 25 data into personal computer 22. As will be described in more detail below, site personal computer 22 receives 26 data from server 20 and utilizes the data to format and transmit 28 information to a delivery computer 23. Delivery computer 23 ordinarily is in the possession of a newspaper boy or girl or other individual or company contracted to physically deliver newspapers or other products to the home, business or other residence of a subscriber. The information received by computer 23 is utilized to deliver 29 a newspaper or other product to a customer's residence 24. If desired, the data necessary to deliver newspapers can instead of or in addition to being transmitted 28 from personal computer 22, be transmitted 27 to delivery computer 23 from server 20.

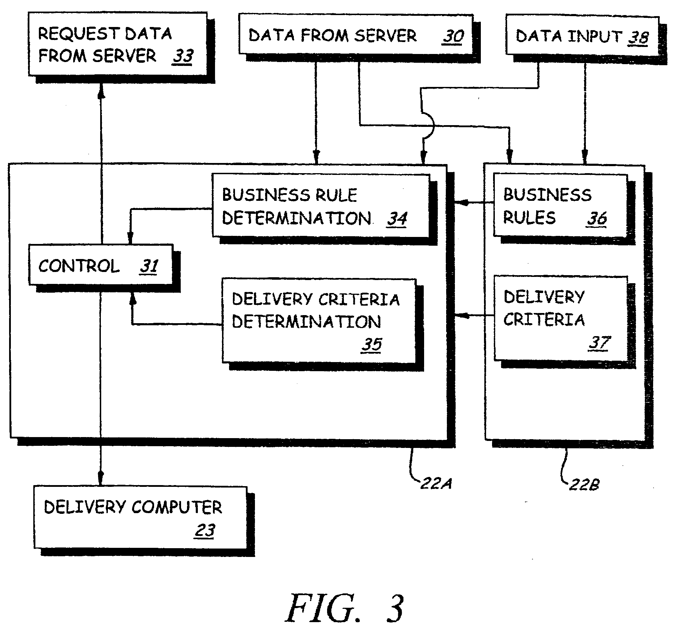

As shown in Fig. 3, site personal computer 22 includes a controller 22A and a memory 22B. The controller 22A can perform any desired function but presently performs the dual function of business rule determination 34 and delivery criteria determination 35. Memory 22B includes business rules 36 and delivery criteria 37. Control 31 requests data from server 33. Data from the server 30 is received by controller 22A and/or memory 22B. A keyboard or other data input 38 at the site of personal computer 22 can also be utilized to input data or computer programs into computer 22. Control 31 transmits data to delivery computer 23, either after computer 23 interrogates computer 22 or simply because computer 22 elects or is requested to transmit data to computer 23.

As used herein, business rules are defined as criteria, which determine whether a subscriber will be delivered a newspaper or other product on any particular calendar date. The following are, by way of example and not limitation, possible business rules:
1. A subscriber in a single family home will not receive a newspaper if the subscriber's account is more than two weeks past due.
2. A subscriber in an apartment will not receive a newspaper if the subscriber's account is more than two days past due.
3. A subscriber living in Phoenix, Arizona in an area with the zip code 85032 will not receive a newspaper if the subscriber's account is past due.
4. The New York Times newspaper will not be delivered to addresses in Phoenix, Arizona in an area with a zip code of 85032.

Business rules incorporated in personal computer 22 can be deleted, modified, or supplemented utilizing data input 38.

As used herein, delivery criteria include any criterion which determines how newspapers are actually delivered, when newspapers are actually delivered, and where newspapers are actually delivered. By way of example, and not limitation, delivery criteria can include:
1. A sequential listing of subscribers. The sequential listing indicates the order in which newspapers are delivered. The first subscriber listed receives a newspaper first, the second listed subscriber receives a newspaper second, and so on. The sequential listing determines in part how newspapers are actually delivered (i.e., in what order) and where newspapers are delivered (i.e., at the addresses of the subscribers).
2. Travel directions on how to travel to each subscriber's residence. Such directions might, for example, begin:
   "Turn south off Greenway onto 46th Street, go four blocks to Nisbet; turn right, deliver to 2nd house (246 Nisbet) on the south side, deliver to 3rd house (248 Nisbet) on south side, ..."
   Such directions determine where newspapers are delivered.
3. Directions to put each newspaper in a plastic bag prior to delivering the newspaper.
4. Directions to fold each newspaper prior to delivery.
5. Directions to deliver each newspaper by 7:00 a.m.

By way of example, in use databases 11 to 18 are installed in server 20. The server is in Phoenix, Arizona. Each site remote from server 20 is provided with a control computer 22. One site is in River City, Iowa, at the "River City Daily" newspaper office. Johnny Jones is a paperboy with a route in River City. Johnny's newspaper route includes the following subscribers:
1. Bill Jones at 2 East Main Street for the River City Daily seven days a week.
   Mr. Jones lives in a single family home residence.
2. Dexter Smith at 4 East Main Street for the River City Daily on Sunday only.
   Mr. Smith lives in a single family home residence. Mr. Smith is the Mayor of River City.
3. Newton's Pharmacy at 10 East Main Street for the River City Daily Monday to Saturday each week and the New York Times each Sunday. Newton's Pharmacy is a business residence.

On December 24. 1999, the business rules programmed into site personal computer 22 include:
1. Any subscriber in a single family home will not be delivered papers if the account is more than two weeks past due.
2. Any subscriber in a business residence, will not be delivered a newspaper if the account is more than one week past due.
3. The Mayor will always receive a paper regardless of how far past due his account is.

On December 24, 1999, the delivery criteria programmed into site personal computer 22 include:
1. The newspapers for. Johnny and all other carriers in River City will be delivered by truck to the corner of Main Street and 1^{st} at 5:00 a.m. on the morning of Saturday, December 25, 1999.
2. Subscribers will receive their newspaper by 7:00 a.m. on the morning of December 25, 1999.

On December 24, 1999, in order to prepare delivery information for Johnny Jones and other carriers, the clerk at the River City Daily turns on the personal computer 22 in the offices of the River City Daily and via modem requests 33 data from server 20 concerning the delivery of newspapers and concerning the status of the accounts in the geographical area served by the River City Daily.

The data which computer 22 receives 30 back from server 20 indicates:
1. Mr. Jones' account is three weeks past due.
2. The Mayor's account is also three weeks past due.
3. The account of Newton Pharmacy is current.
4. Special delivery instructions for the morning of December 25, 1999: prior to delivery, place each newspaper in a plastic bag imprinted with a "Merry Christmas" holly decoration; each carrier should include a Christmas card in the plastic bag along with the newspaper

The control computer (i.e., site personal computer 22), after receiving 30 data from server 30, analyzes the data, along with other data in computer 22 and produces the following table of information:

| **RIVER CITY DAILY** | |
|---|---|
| **DELIVERY INFORMATION** | |
| TODAY'S DATE: December 24, 1999 | |
| DELIVERY DATE: December 25, 1999 | |
| CARRIER: Johnny Jones | |
| SUBSCRIBER | PRODUCT |
| Honorable Dexter Smith, Mayor 4 East Main Street | River City Daily |
| Newton's Pharmacy 10 East Main Street | River City Daily |
| PICK UP YOUR PAPERS: | Main Street and 1st at 5:00 a.m. on Saturday |
| | December 25, 1999 |
| DELIVER BY: | 7:00a.m. 12/25/99 |
| SPECIAL INSTRUCTIONS: | Prior to delivery, place each newspaper in a |
| | plastic bag imprinted with a "Merry Christmas" |
| | holly decoration; include a Christmas card in |
| | each plastic bag along with the newspaper. |
| TRAVEL DIRECTIONS: | Deliver at 4 East Main on South Side of Main |
| | Street, then go East two buildings to 10 East |
| | Main and deliver. |

The foregoing "RIVER CITY DAILY DELIVERY INFORMATION" table of information is printed out for Johnny Jones at the main office of the River City Daily.
On December 24, Johnny picks up the print out. Johnny also owns a delivery computer 23. Using the modem on his computer, Johnny accesses the control computer 22 and downloads the foregoing "RIVER CITY DAILY DELIVERY INFORMATION" table of information and prints it out on his (Johnny's) printer. On the morning of the next day, December 25, Johnny follows the delivery instructions provided in the "RIVER CITY DAILY DELIVERY INFORMATION" table. He picks up the newspapers for Mr. Smith and the Newton Pharmacy at Main and 1st at about 5:00 a.m. He places each paper in a plastic bag imprinted "Merry Christmas" holly decoration, along with a Christmas card, and delivers the papers prior to 7:00 a.m. Mr. Jones' name is not included by computer 22 in the "RIVER CITY DAILY DELIVERY INFORMATION" table because his account is over two weeks past due. Mr. Jones does not receive a paper. Even though the Mayor's account is over three weeks past due, the Mayor receives a paper because the special exception noted above is programmed into site personal computer 22 and insures that the Mayor will always get a paper and will always be included by computer 22 in the "RIVER CITY DAILY DELIVERY INFORMATION" table (unless, of course, the special exception is removed from computer 22).

On December 25, 1999, Johnny's newspaper route includes the following subscribers:
1. Bill Jones at 2 East Main Street for the River City Daily seven days a week.
   Mr. Jones lives in a single family home residence.
2. Dexter Smith at 4 East Main Street for the Riser City Daily on Sunday only.
   Mr. Smith lives in a single family home residence. Mr Smith is the Mayor of River City.
3. Newton's Pharmacy at 10 East Main Street for the River City Daily Monday to Saturday each week and the New York Times each Sunday. Newton's Pharmacy is a business residence.
4. River City Jewellers at 15 East Main Street for the River City Daily Monday to Friday of each week.

On December 25, 1999, the business rules programmed into site personal computer 22 include:
1. Any subscriber in a single family home will not be delivered newspapers if the account is more than two weeks past due.
2. Any subscriber in a business residence will not be delivered a newspaper if the account is more than one week past due.
3. The Mayor will always receive a paper regardless of how far past due his account is.

On December 25, 1999, the delivery criteria programmed into site personal computer 22 for the following day include:
1. The newspapers for Johnny and all other carriers in River City will be delivered by truck to the corner of Main Street and 1st at 5:00 a.m. on the morning of Sunday, December 26, 1999.
2. Deliver each paper to a subscriber by 7:00 a.m. on the morning of December 26. 1999.

On December 25, 1999, in order to prepare delivery information for Johnny Jones and other carriers, the clerk at the River City Daily turns on the personal computer 22 in the offices of the River City Daily and via modem requests 33 data from server, 20 concerning the delivery of newspapers and concerning the status of the accounts, in the geographical area served by the River City Daily. The data which computer 22 receives 30 back from server 20 indicates:
1. Mr. Jones account is current.
2. The Mayor's account is current.
3. The account of Newton Pharmacy is current.
4. The account of River City Jewellers is current.

The control computer (ie., site personal computer 22), after receiving 30 data from server 30, analyzes the data, along with other data in computer 22 and produces the following table of information:

| **RIVER CITY DAILY** | |
|---|---|
| **DELIVERY INFORMATION** | |
| TODAY'S DATE: December 25, 1999 | |
| DELIVERY DATE: December 26, 1999 | |
| CARRIER: Johnny Jones | |
| SUBSCRIBER | PRODUCT |
| Honorable Dexter Smith, Mayor 4 East Main Street | River City Daily |
| Mr. Bill Jones 2 East Main Street | River City Daily |
| Newton's Pharmacy 10 East Main Street | New York Times |
| PICK UP YOUR PAPERS:, | Main Street and 1st at 5:00 a.m. on Friday |
| | December 261999 |
| DELIVER BY: | 7:00a.m. 12/26/99 |
| SPECIAL INSTRUCTIONS: | None. |
| TRAVEL DIRECTIONS: | Deliver at 2 East Main on South Side of Main |
| | Street, then go East one building to 4 East Main |
| | on South Side of Main Street and deliver, then |
| | go East three building to 10 East Main on |
| | South Side of Main Street and deliver. |

The foregoing "RIVER CITY DAILY DELIVERY INFORMATION" table of information (dated December 25 for deliveries on December 26) is printed out for Johnny Jones at the main office of the River City Daily. On December 25, Johnny picks up the print out. Johnny also owns a delivery computer 23. Using the modem on his computer, Johnny accesses the control computer 22 and downloads the 15 foregoing table of information and prints it out on his (Johnny's) printer. On the morning of the next day, December 26, Johnny follows the delivery instructions provided. He picks up the newspapers for Mr. Smith, Mr. Jones and the Newton Pharmacy at Main and 1st at about 5:00 a.m. He delivers the papers prior to 7:00 a.m. River City Jewellers is not included by control computer 22 in the "'RIVER CITY DAILY DELIVERY INFORMATION" table dated December 25 because it does not receive any paper on Sunday.

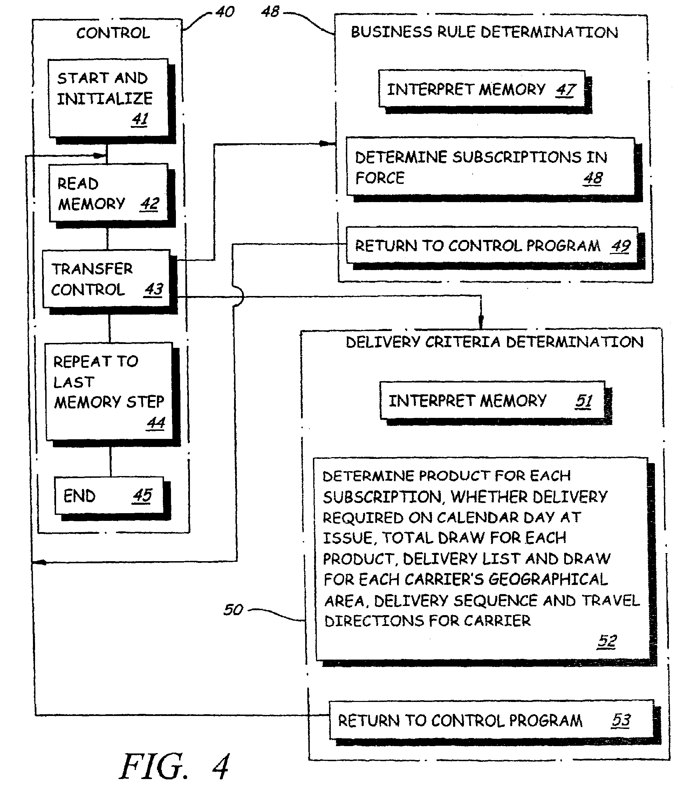

Fig. 4 is a block flow diagram which illustrates a typical program or logic function which is executed by the controller 22A each day or each time that controller 22A queries server 20 and prepares a "RIVER CITY DAILY DELIVERY INFORMATION" table for a carrier. The basic control program 40 consists of commands to "start and initialize" 41, "read memory" 42 and "transfer control" 43 to either the business rule determination sub-routine 48 or the delivery criteria determination sub-routine 50.

The business rule determination sub-routine 48 consists of commands to "interpret memory" 47 (i.e. obtain from memory 22B account information which is obtained by interrogating server 20) and "determine which subscriptions are in force" 48, followed by "return to control program" 49. Sub-routine 48 typically determines which subscriptions are in force in the entire geographical area or areas served by the company or other entity utilizing the control computer 22.

The delivery criteria determination sub-routine 50 includes the command to "interpret memory" 47. During "interpret memory" 47 the following information is obtained from memory 22B: the subscriptions which are in force, the product or products (i.e, the particular newspaper or other product for each subscription) to be delivered for each subscription, the days of the week when delivery of the product is required for each subscription, the addresses in the area or areas (i.e., routes) served by each carrier, travel directions to each subscription address, special delivery instructions (if any) for each carrier, and the time and place at which each carrier picks up products. The "interpret memory" 47 command is followed by command 52 to "determine product for each subscription, whether delivery is required on the calendar date at issue, the total draw for each product, the delivery list and draw for each carrier's geographical area. and the delivery sequence and travel directions for each carrier". During command 52 the "RIVER CITY DAILY DELIVERY INFORMATION" table is generated for each carrier. This table can be downloaded from control computer 22 to a printer or can be transmitted 25 from computer 22 to a delivery computer 23 or other desired location. Computer 22 preferably includes in memory 22B every home, business, and other delivery address in the geographic area or areas served by the River City Daily. Server 20 also preferably includes in database 12 every home, business, and other delivery address in the geographic area or areas served by each site (i.e., each control computer 22) which accesses the databases in serer 20.

## Claims

1. A newspaper circulation system including
(a) at least one server (20) including subscription and delivery data;
(b) at least one control computer (22) in a geographical area remote from said server (20) to access said subscription and delivery data in said server (20) and including
(i) means to utilize at least a portion of said subscription and delivery data to determine which subscriptions are in force in said geographical area., and
(ii) means to utilize at least a portion of said subscription and delivery data to produce a delivery list for at least one selected date.

2. A newspaper circulation system including
(a) at least one server (20) including subscription and delivery data;
(b) at least one delivery computer (23) remote from said server;
(c) at least one control computer (22) in a geographical area remote from said server to access said subscription and delivery data in said server (20) and including means to utilize at least a portion of said subscription and delivery data to produce a delivery list for at least one selected calendar date, said delivery list comprising a list of subscribers receiving a newspaper; and,
(d) means for transmitting from said control computer to said delivery computer (23) said delivery list for display on said delivery computer.

3. A newspaper circulation system including
(a) at least one server including subscription and delivery data for at least two different newspapers:
(b) at least one delivery computer remote from said server;
(c) at least one control computer in a geographical area remote from said server to access said subscription and delivery data in said server and including means to utilize at least a portion of said subscription and delivery data to produce a delivery list for at least one selected calendar date, said delivery list comprising a list of subscribers some of which receiving one of said two different newspapers and some of which receive the other of said two different newspapers; and
(d) means for transmitting from said control computer to said delivery computer said delivery list for display on said delivery computer to enable delivery of said different newspapers on said calendar date.

4. A method for delivering newspapers, including the steps of
(a) providing a server computer including memory;
(b) storing in said memory
(i) subscription and delivery data including customers who receive a newspaper one day a week and customers who receive a newspaper more than one day a week, and
(ii) the address of each residence in a selected geographical area;
(c) providing a control computer remote from said server to access said subscription and delivery data in said server and including means to utilise at least a portion of said subscription and delivery data to produce a delivery list for at least one selected calendar date to deliver
(iii) a first newspaper to a customer who receives a newspaper only one time a week, and
(iv) a second newspaper to a customer who receives a newspaper more than once a week

5. A method for delivering newspapers including
(a) providing at least one server including subscription and delivery data for a newspaper;
(b) providing at least one delivery computer remote from said server;
(c) providing at least one control computer in a geographical area remote from said server to access said subscription and delivery data in said server and including selection means to utilise at least a portion of said subscription and delivery data to generate a delivery list for at least one selected calendar date said delivery list comprising
(i) a list of subscribers in a selected sequence for delivering a newspaper to the subscribers
(ii) travel directions for reaching the address of each of the subscribers; and,
(a) providing transmitting means for transmitting from said control computer to said delivery computer and delivery list for display on the delivery computer to enable delivery of the newspapers on the calendar date in the selected sequence;
(b) accessing with said control computer and subscription and delivery data in said server;
(c) using said selection means to utilise a portion of the subscription and delivery data to generate a delivery list for at least one selected calendar date;
(d) using said transmitting means to transmit from said control computer to said delivery computer and delivery list for display on said delivery computer; and,
(e) using the delivery list displayed on said delivery computer to deliver newspaper to the subscribers on the delivery list.
